# EUROPEAN PATENT APPLICATION

(11) **EP 4 668 354 A1**
(43) Date of publication of application: **24.12.2025**
(21) Application number: 24882946.7
(22) Date of filing: 10.10.2024
(51) Int. Cl.: H01M 4/131, H01M 4/62, H01M 4/525, H01M 4/505, H01M 10/0562, H01M 10/0585, H01M 10/052, H01M 4/02

(54) **POSITIVE ELECTRODE FOR SECONDARY BATTERY, AND SECONDARY BATTERY COMPRISING SAME**

(30) Priority: 23.10.2023 KR 20230142389
(71) Applicant: LG Energy Solution, Ltd., Seoul 07335 (KR)
(72) Inventor: OH, Kyungbae, Daejeon 34122 (KR); KWON, Hyejin, Daejeon 34122 (KR); KIM, Myeongsoo, Daejeon 34122 (KR); KIM, Sohee, Daejeon 34122 (KR); LEE, Choonghyeon, Daejeon 34122 (KR); CHOI, Seokin, Daejeon 34122 (KR); KANG, Sora, Daejeon 34122 (KR)
(74) Representative: Goddar, Heinz J.
(86) International application number: PCT/KR2024/096256
(87) International publication number: WO 2025/089920

(57) **Abstract**

The present invention relates to a positive electrode for a secondary battery and a secondary battery comprising the same, and more specifically, to a positive electrode for a secondary battery comprising a first positive electrode layer and a second positive electrode layer.

## Description

### [Technical Field]

The present application claims the benefit of priority based on Korean Patent Application No. 10-2023-0142389, filed on October 23, 2023, the contents of which are incorporated herein as part of this specification.

The present invention relates to a positive electrode for a secondary battery and a secondary battery comprising the same, and more specifically, to a positive electrode for a secondary battery comprising a first positive electrode layer and a second positive electrode layer.

### [Background Art]

A secondary battery refers to a device that converts external electrical energy into chemical energy for storage and generates electricity when needed. It is also called a rechargeable battery because it can be charged multiple times. Common secondary batteries include lead-acid batteries, nickel-cadmium batteries (NiCd), nickel-metal hydride batteries (NiMH), and lithium secondary batteries. Secondary batteries provide both economic and environmental advantages compared to primary batteries that are discarded after a single use.

Meanwhile, as wireless communication technology continues to develop, there is increasing demand for secondary batteries as energy sources for portable devices or automobile accessories that require lightweight, thin, and compact designs. In particular, as hybrid vehicles and electric vehicles are commercialized to prevent environmental pollution, research is emerging to use secondary batteries in next-generation vehicle batteries to reduce manufacturing costs and weight while extending lifespan. Among various secondary batteries, lithium secondary batteries are recently gaining attention for their light weight, high energy density, high operating voltage, and long lifetime.

Generally, lithium batteries are manufactured by mounting an electrode assembly consisting of a negative electrode, a positive electrode, and a separator inside a cylindrical or prismatic metal can or a pouch-type case made of aluminum laminate sheet, and injecting an electrolyte into the electrode assembly.

Conventionally, a liquid electrolyte in which a lithium salt is dissolved in a nonaqueous organic solvent has been mainly used as the electrolyte for lithium secondary batteries. However, such liquid electrolytes have a high possibility of electrode material degradation and organic solvent evaporation, as well as concerns of combustion or explosion due to ambient temperature and battery temperature rise, and risk of leakage, making it difficult to implement various types of lithium secondary batteries with high safety.

Meanwhile, all-solid-state batteries using solid electrolytes have the advantage of being able to manufacture electrode assemblies in a safe and simple form because there is no risk of leakage.

In manufacturing all-solid-state batteries, solid electrolytes must be added to the electrodes, but this causes side reactions between a solid electrolyte and a positive electrode active material or reduces ionic conductivity.

Therefore, there is a need to develop a positive electrode that can improve battery performance by reducing side reactions between a solid electrolyte and a positive electrode active material while simultaneously improving ionic conductivity.

### [Prior Art Documents]

### [Patent Documents]

(Patent Document 1) Japanese Registered Patent No. 7228816 (Feb. 16, 2023)

### [Summary of Invention]

### [Technical Problem]

The present inventors have conducted researches in various ways to solve the above problems and completed the present invention by confirming that a battery with improved high-power and lifetime characteristics can be manufactured by reducing side reactions between the solid electrolyte and the positive electrode active material and improving ionic conductivity by using a positive electrode comprising a first positive electrode layer and a second positive electrode layer each containing different solid electrolytes.

Therefore, an object of the present invention is to provide a positive electrode for a secondary battery with improved lifetime characteristics by suppressing side reactions between a positive electrode active material and a solid electrolyte, and a secondary battery comprising the same.

### [Solution to Problem]

In one aspect of the present invention, there is provided a positive electrode for a lithium secondary battery comprising: a positive electrode current collector; and a positive electrode composite layer laminated on one side of the positive electrode current collector, wherein the positive electrode composite layer comprises a first positive electrode layer and a second positive electrode layer, the first positive electrode layer comprises a positive electrode active material, a first solid electrolyte, a conductive material, and a binder, the second positive electrode layer comprises a positive electrode active material, a second solid electrolyte, a conductive material, and a binder, and the first solid electrolyte and the second solid electrolyte are different from each other.

In one aspect of the present invention, there is provided a positive electrode for a lithium secondary battery, wherein the first solid electrolyte comprises a halide-based solid electrolyte, and the second solid electrolyte comprises a sulfide-based solid electrolyte.

In one aspect of the present invention, there is provided a positive electrode for a lithium secondary battery, wherein the first solid electrolyte is represented by the following Chemical Formula 1:

[Chemical Formula 1] Li-M-X

In Chemical Formula 1,
M is a metal element selected from the group consisting of Y, Sc, Cr, Mn, Fe, Co, Ni, Al, Ga, As, Sb, Bi, Mg, Ca, Zn, Cd, Tb, Dy, Ho, Tm, and Yb, X is a halogen element, which is F, Cl, or Br.

In one aspect of the present invention, there is provided a positive electrode for a lithium secondary battery, wherein the second solid electrolyte comprises one or more selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, LiS-GeS₂ and Li₂S-GeS₂-ZnS.

In one aspect of the present invention, there is provided a positive electrode for a lithium secondary battery, wherein the positive electrode composite layer is disposed between the positive electrode current collector and a solid electrolyte layer, and the second positive electrode layer is disposed on one side of the solid electrolyte layer.

In one aspect of the present invention, there is provided a positive electrode for a lithium secondary battery, wherein a mass ratio of the first positive electrode layer and the second positive electrode layer is 20:80 to 80:20.

In one aspect of the present invention, there is provided a positive electrode for a lithium secondary battery, wherein a loading level of the positive electrode is 5 mAh/cm² or more.

In one aspect of the present invention, there is provided a positive electrode for a lithium secondary battery, wherein the secondary battery is an all-solid-state battery.

In one aspect of the present invention, there is provided an all-solid-state lithium secondary battery comprising: the positive electrode according to any one of the above aspects; a negative electrode; and a solid electrolyte disposed between the positive electrode and the negative electrode.

### [Advantageous Effects]

The present invention can provide a battery with improved high-power and lifetime characteristics by suppressing side reactions between the positive electrode active material and the solid electrolyte to reduce resistance during battery operation and implementing improved ionic conductivity of the secondary battery.

### [Brief Description of Drawings]

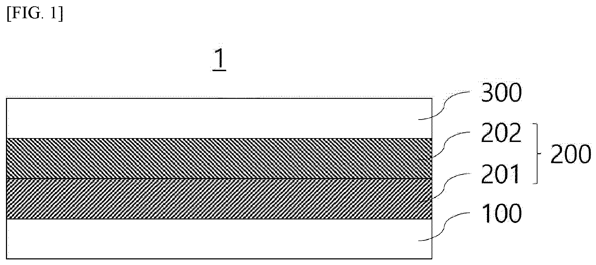

FIG. 1 is a schematic diagram of a secondary battery according to an embodiment of the present invention.

### [Best mode for carrying out the invention ]

Hereinafter, the present invention will be described in more detail.

The terms or words used in this specification and claims should not be interpreted as being limited to their ordinary or dictionary meanings, but rather should be understood in line with the ideas and concepts of the invention, based on the principle that the inventor may define the terms as needed to best explain the invention.

The terms used in the present invention are used only to describe specific embodiments and are not intended to limit the present invention. Expressions in the singular include the plural unless the context clearly indicates otherwise. In the present invention, the terms "comprise" or "have" are intended to indicate the presence of characteristics, numbers, steps, components, or combinations thereof described in the specification, and do not preclude the presence or possibility of addition of one or more other characteristics, numbers, steps, components, or combinations thereof.

In manufacturing all-solid-state batteries, solid electrolytes must be added to the electrodes to ensure ionic conduction, but this causes side reactions between the solid electrolyte and the positive electrode active material or reduces ionic conductivity.

Therefore, the present invention aims to provide a positive electrode for a secondary battery that can improve high-power and lifetime characteristics by reducing side reactions between the solid electrolyte and the positive electrode active material while simultaneously improving ionic conductivity.

Hereinafter, before providing a detailed description of the positive electrode for a secondary battery according to an embodiment of the present invention with reference to FIG. 1, a brief description of the configuration of the secondary battery comprising the positive electrode will be provided first.

FIG. 1 is a schematic diagram of a lithium secondary battery according to an embodiment of the present invention.

Referring to FIG. 1, the lithium secondary battery 1 may comprise a positive electrode current collector 100, a positive electrode composite layer 200, and a solid electrolyte layer 300, and the positive electrode composite layer 200 may comprise a first positive electrode layer 201 and a second positive electrode layer 202.

The positive electrode composite layer 200 may be disposed between the positive electrode current collector 100 and the solid electrolyte layer 300.

The first positive electrode layer 201 may be disposed on one side of the positive electrode current collector 100, and the second positive electrode layer 202 may be disposed on one side of the solid electrolyte layer 300.

Hereinafter, the positive electrode according to an embodiment of the present invention will be described in more detail.

According to an embodiment of the present invention, the positive electrode for a lithium secondary battery may comprise a positive electrode current collector and a positive electrode composite layer laminated on one side of the positive electrode current collector, wherein the positive electrode composite layer 200 comprises a first positive electrode layer 201 and a second positive electrode layer 202, the first positive electrode layer 201 comprises a positive electrode active material, a first solid electrolyte, a conductive material, and a binder, and the second positive electrode layer 202 comprises a positive electrode active material, a second solid electrolyte, a conductive material, and a binder, and the first solid electrolyte and the second solid electrolyte are different from each other.

According to an embodiment of the present invention, the first solid electrolyte may comprise a halide-based solid electrolyte.

The halide-based solid electrolyte (Li-M-X) comprises a halogen element (X) and a metal element (M), where metals or semimetals with an oxidation state of 2, 3, or 4 are mainly used as the metal element (M).

The first solid electrolyte may be represented by the following Chemical Formula 1:

[Chemical Formula 1] Li-M-X

In Chemical Formula 1, M is a metal element selected from the group consisting of Y, Sc, Cr, Mn, Fe, Co, Ni, Al, Ga, As, Sb, Bi, Mg, Ca, Zn, Cd, Tb, Dy, Ho, Er, Tm, and Yb,
X is a halogen element, which is F, Cl, or Br.

Specifically, the halide-based solid electrolyte may be Li₃YCl₆, Li₃YBr₆, Li₃YCl₃Br₃, etc., but is not limited to these examples.

According to an embodiment of the present invention, the second solid electrolyte may comprise a sulfide-based solid electrolyte.

The sulfide-based solid electrolyte contains sulfur (S) and has ionic conductivity of metals belonging to Group 1 or Group 2 of the periodic table, and may include Li-P-S-based glass or Li-P-S-based glass ceramics.

Specifically, the sulfide-based solid electrolyte may comprise one or more selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ 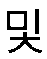 Li₂S-GeS₂-ZnS, and preferably may comprise one or more selected from the group consisting of Li₆PS₅Cl, Li₆PS₅Br and Li₆PS₅I. The Li₆PS₅Cl, Li₆PS₅Br and Li₆PS₅I may be argyrodite-type solid electrolytes. In addition, the sulfide-based solid electrolyte may be in a form doped with trace elements, for example, Li₆PS₅Cl may be additionally doped with bromine (Br).

Generally, halide-based solid electrolytes have relatively good oxidation stability but have lower ionic conductivity compared to sulfide-based solid electrolytes. In addition, sulfide-based solid electrolytes have low oxidation stability and cause side reactions with positive electrode materials such as NCM, leading to increased resistance during battery operation.

Therefore, the present invention can provide a positive electrode for a secondary battery with improved high-power and lifetime characteristics by including a halide-based solid electrolyte with excellent oxidation stability in the positive electrode composite layer in contact with the positive electrode current collector, and including a sulfide-based solid electrolyte with excellent ionic conductivity in the positive electrode composite layer in contact with the solid electrolyte.

According to an embodiment of the present invention, the positive electrode composite layer may comprise a positive electrode active material, a solid electrolyte, a conductive material, and a binder.

The positive electrode active material may comprise a lithium metal oxide represented by the following Chemical Formula 2:

[Chemical Formula 2] Liₓ[Ni_{y}Co_{z}Mn_{w}M¹ᵥ]Oᵤ

In Chemical Formula 2, M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo; x, y, z, w, v, and u are 1.0≤x≤1.30, 0.1≤y<0.95, 0.01<z≤0.5, 0.01<w≤0.5, 0≤v≤0.2, 1.5≤u≤4.5, respectively.

The lithium metal oxide represented by Chemical Formula 2 is an oxide containing lithium and transition metal, and may contain nickel in a high content among the transition metals. As an example, the lithium metal oxide may comprise one or more selected from the group consisting of LiNi_{0.9}Co_{0.05}Mn_{0.05}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}Co_{0.1}Mn_{0.1}Al_{0.1}O₂, and LiNi_{0.8}Co_{0.1}Mn_{0.05}Al_{0.05}O₂. The lithium metal oxide contains nickel in high content and has an excellent effect of improving the charge-discharge capacity of the battery.

The solid electrolyte may comprise one or more selected from the group consisting of sulfide-based solid electrolytes, polymer-based solid electrolytes, oxide-based solid electrolytes, and halide-based solid electrolytes, and preferably may comprise a sulfide-based solid electrolyte. The solid electrolyte may be in particle form.

The sulfide-based solid electrolyte and halide-based solid electrolyte are as described above.

The polymer-based solid electrolyte is a polymer electrolyte material formed by adding a polymer resin to a solvated lithium salt, that is, a composite of a lithium salt and a polymer resin, and may exhibit an ionic conductivity of about 1x10⁻⁷ S/cm or more, preferably about 1x10⁻⁵ S/cm or more.

Non-limiting examples of the polymer resin include polyether-based polymers, polycarbonate-based polymers, acrylate-based polymers, polysiloxane-based polymers, polyphosphazene-based polymers, polyethylene derivatives, alkylene oxide derivatives such as polyethylene oxide, phosphate ester polymers, poly agitation lysine, polyester sulfides, polyvinyl alcohol, polyvinylidene fluoride, polymers containing ionic dissociating groups, etc., and may include one or more of these. In addition, as the polymer resin, the polymer electrolyte may include one or more of branched copolymers copolymerized with amorphous polymers such as PMMA, polycarbonate, polysiloxane (pdms) and/or polyphosphazene as comonomers on the PEO (poly ethylene oxide) main chain, comb-like polymer resins, and crosslinked polymer resins.

In the electrolyte of the present invention, the aforementioned lithium salt can be expressed as Li⁺X⁻ as an ionizable lithium salt. Although not particularly limited, the anion of such a lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The oxide-based solid electrolyte may have ionic conductivity of metals belonging to Group 1 or Group 2 of the periodic table containing oxygen (O). For example, it may include one or more selected from LLTO-based compounds, Li₆La₂CaTa₂O₁₂, Li₆La₂ANb₂O₁₂ (where A is Ca or Sr), Li₂Nd₃TeSbO₁₂, Li₃BO_{2.5}N_{0.5}, Li₉SiAlO₈, LAGP-based compounds, LATP-based compounds, Lil₊ₓTi₂₋ₓAlₓSi_{y}(PO₄)_{3-y} (where 0≤x≤1, 0≤y≤1), LiAlₓZr₂₋ₓ(PO₄)₃ (where 0≤x≤1, 0≤y≤1), LiTiₓZr₂₋ₓ(PO₄)₃ (where 0≤x≤1, 0≤y≤1), LISICON-based compounds, LIPON-based compounds, perovskite-based compounds, NASICON-based compounds, and LLZO-based compounds.

In addition, the conductive material is not particularly limited as long as it has conductivity without causing chemical changes in the battery, but specifically may include graphite, carbon-based materials, metal powder or metal fiber, needle-like or branched conductive whiskers, conductive metal oxides, conductive polymers, and any one of these or mixtures thereof. More specifically, natural graphite or artificial graphite, etc. as graphite; carbon-based materials such as carbon black, acetylene black, ketjen black, channel black, furnace black, lamp black, thermal black, carbon fiber, etc.; metal powder or metal fiber such as copper, nickel, aluminum, silver, etc.; needle-like or branched conductive whiskers such as zinc oxide whiskers, calcium carbonate whiskers, titanium dioxide whiskers, silicon dioxide whiskers, silicon carbide whiskers, aluminum borate whiskers, magnesium borate whiskers, potassium titanate whiskers, silicon nitride whiskers, silicon carbide whiskers, alumina whiskers, etc.; conductive metal oxides such as titanium oxide, or conductive polymers such as polyphenylene derivatives, etc. may be used, and any one or a mixture of two or more of these may be used.

In addition, the positive electrode binder may be any one selected from the group consisting of N,N-bis [3-(triethoxysilyl)propyl]urea, polyethylene oxide (PEO), poly(vinylidene fluoride) (PVDF), poly(vinylidene fluoride-co-hexafluoropropylene) (PVDF-co-HFP), or a mixture of two or more of these, or any one selected from the group consisting of N,N-bis [3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated diene-based rubber latex such as acrylonitrile-based styrene butadiene rubber (SBR), acrylonitrile butadiene rubber (NBR), methacrylic acid methyl butadiene rubber (MBR), butadiene rubber (BR), etc., carboxymethyl cellulose (CMC), starch, hydroxypropyl cellulose, regenerated cellulose, polyvinylpyrrolidone, polytetrafluoroethylene (PTFE), polyethylene, polypropylene, ethylene-propylene-diene terpolymer (EPDM), sulfonated EPDM, styrene-butadiene rubber, fluorine rubber, various copolymers, etc., or a mixture of two or more of these.

According to an embodiment of the present invention, the mass ratio of the first positive electrode layer and the second positive electrode layer may be 20:80 to 80:20. More specifically, the mass ratio of the first positive electrode layer and the second positive electrode layer may be 20:80, 25:75, 30:70, 35:65, 40:60, 45:55, 50:50, 55:45, 60:40, 65:35, 70:30, 75:25, or 80:20, but is not limited to these ranges.

If the mass ratio of the first positive electrode layer and the second positive electrode layer is outside the above range, there is a problem that the lifetime characteristics of the battery are significantly deteriorated.

According to an embodiment of the present invention, the loading level of the positive electrode may be 5 mAh/cm² or more.

According to an embodiment of the present invention, the lithium secondary battery may be an all-solid-state battery.

The lithium secondary battery may comprise the positive electrode according to any one embodiment of the present invention, a negative electrode, and a solid electrolyte interposed between the positive electrode and the negative electrode.

The lithium secondary battery may be an all-solid-state lithium secondary battery.

The lithium secondary battery according to the present invention includes the positive electrode of the present invention as described above, and may exhibit excellent battery performance with reduced side reactions between the positive electrode active material and the solid electrolyte and reduced resistance within the positive electrode.

In this case, the positive electrode may have a structure in which a positive electrode composite layer, including the first positive electrode layer and the second positive electrode layer of the present invention described above, is formed on the positive electrode current collector.

The positive electrode current collector is not particularly limited as long as it has high conductivity without causing chemical changes in the battery, and may include, for example, stainless steel, aluminum, nickel, titanium, sintered carbon, or aluminum or stainless steel surface-treated with carbon, nickel, titanium, silver, etc.

In addition, the negative electrode may have a structure in which a negative electrode composite layer containing a negative electrode active material is formed on a negative electrode current collector.

The negative electrode current collector is not particularly limited as long as it has high conductivity without causing chemical changes in the battery, and may include, for example, stainless steel, copper, nickel, titanium, sintered carbon, or stainless steel surface-treated with carbon, nickel, titanium, silver, etc.

In addition, the negative electrode composite layer may contain a negative electrode active material, a conductive material, a binder, and a solid electrolyte, and may further contain additives in some cases.

In this case, the negative electrode active material may be any one selected from the group consisting of lithium metal, lithium alloy, lithium metal composite oxide, lithium titanium composite oxide (LTO), and combinations thereof. Here, the lithium alloy may be an alloy of lithium with at least one metal selected from Na, K, Rb, Cs, Fr, Be, Mg, Ca, Sr, Ba, Ra, Al, and Sn. In addition, the lithium metal composite oxide may be an oxide of lithium and a metal (Me) selected from the group consisting of Si, Sn, Zn, Mg, Cd, Ce, Ni, and Fe (MeOx), and may be, for example, LiₓFe₂O₃(0<x≤1) or LiₓWO₂(0<x≤1).

In addition, the negative electrode active material may use metal composite oxides such as SnₓMe₁₋ₓMe'_{y}O_{z} (Me: Mn, Fe, Pb, Ge; Me': Al, B, P, Si, Group 1, 2, 3 elements of the periodic table, halogens; 0<x≤1; 1≤y≤3; 1≤z≤8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅, and carbon-based negative electrode active materials such as crystalline carbon, amorphous carbon, or carbon composites may be used alone or in combination of two or more.

In addition, the conductive material may include nickel powder, cobalt oxide, titanium oxide, carbon, etc. As carbon, any one or one or more selected from the group consisting of ketjen black, acetylene black, furnace black, graphite, carbon fiber, and fullerene may be used.

In addition, the negative electrode binder may be any one selected from the group consisting of N,N-bis [3-(triethoxysilyl)propyl]urea, polyethylene oxide (PEO), poly(vinylidene fluoride) (PVDF), poly(vinylidene fluoride-co-hexafluoropropylene) (PVDF-co-HFP), or a mixture of two or more of these, or any one selected from the group consisting of N,N-bis [3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated diene-based rubber latex such as styrene butadiene rubber (SBR), acrylonitrile butadiene rubber (NBR), methacrylic acid methyl butadiene rubber (MBR), butadiene rubber (BR), etc., carboxymethyl cellulose (CMC), starch, hydroxypropyl cellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber, fluorine rubber, various copolymers, etc., or a mixture of two or more of these.

### [Mode for Invention]

Hereinafter, preferred embodiments are presented to aid in understanding the present invention, but the following embodiments are only for illustrating the present invention, and various modifications and changes may be made within the scope and technical idea of the present invention, which would be apparent to those skilled in the art, and such modifications and changes are included in the attached claims.

### Example 1: Manufacture of Positive Electrode

LiNi_{0.8}Co_{0.1}Mn_{0.1}O₂ and Li₃YCl₆ were mixed at a mass ratio of 85:15 using a lab blender at 5000 rpm for 30 minutes, then CNT and PTFE were added at a 1:1 ratio for 2% of the total weight and mixed for an additional 5 minutes. Afterwards, a free-standing first positive electrode composite layer was manufactured using a two-roll mill (MR-3, Inoue Co.).

LiNi_{0.8}Co_{0.1}Mn_{0.1}O₂ and Li₆PS₅Cl (LPSCl) were mixed at a mass ratio of 85:15 using a lab blender at 5000 rpm for 30 minutes, then CNT and PTFE were added at a 1:1 ratio for 2% of the total weight and mixed for an additional 5 minutes. Afterwards, a free-standing second positive electrode composite layer was manufactured using a two-roll mill (MR-3, Inoue Co.).

The first positive electrode composite layer was laminated on one side of an aluminum current collector, and the second positive electrode composite layer was laminated on one side of the first positive electrode composite layer in order, then pressed to manufacture a positive electrode. At this time, the mass ratio of the first positive electrode composite layer and the second positive electrode composite layer was laminated to be 50:50.

### Example 2

A positive electrode was manufactured in the same manner as described in Example 1, except that Li₃YCl₃Br₃ was used as the first solid electrolyte and Li₆PS₅Cl was used as the second solid electrolyte.

### Example 3

A positive electrode was manufactured in the same manner as described in Example 1, except that the mass ratio of the first positive electrode composite layer and the second positive electrode composite layer was 30:70.

### Example 4

A positive electrode was manufactured in the same manner as described in Example 1, except that the mass ratio of the first positive electrode composite layer and the second positive electrode composite layer was 70:30.

### Comparative Example 1

A positive electrode was manufactured in the same manner as described in Example 1, except that only the first positive electrode composite layer was used without using the second positive electrode composite layer.

### Comparative Example 2

A positive electrode was manufactured in the same manner as described in Example 1, except that only the second positive electrode composite layer was used without using the first positive electrode composite layer.

### Comparative Example 3

A positive electrode was manufactured in the same manner as described in Example 1, except that the first positive electrode composite layer included Li₆PS₅Cl (LPSCl) powder and the second positive electrode composite layer included Li₃YCl₆ powder.

### Comparative Example 4

A positive electrode was manufactured in the same manner as described in Example 1, except that the mass ratio of the first positive electrode composite layer and the second positive electrode composite layer was 10:90.

**[Table 1]**

| | first positive electrode composite layer | second positive electrode composite layer | Mass ratio of first positive electrode composite layer and second positive electrode composite layer |
|---|---|---|---|
| | Solid electrolyte | Solid electrolyte | |
| Example 1 | Li₃YCl₆ | Li₆PS₅Cl | 50:50 |
| Example 2 | Li₃YCl₃Br₃ | Li₆PS₅Cl | 50:50 |
| Example 3 | Li₃YCl₆ | Li₆PS₅Cl | 30:70 |
| Example 4 | Li₃YCl₆ | Li₆PS₅Cl | 70:30 |
| Comp. Ex 1 | Li₃YCl₆ | - | 100:0 |
| Comp. Ex 2 | - | Li₆PS₅Cl | 0:100 |
| Comp. Ex 3 | Li₆PS₅Cl | Li₃YCl₆ | 50:50 |
| Comp. Ex 4 | Li₃YCl₆ | Li₆PS₅Cl | 10:90 |

### Experimental Example 1: Evaluation of Initial Discharge Capacity and Efficiency

Using a 40 µm thick lithium metal as the anode, a 50 µm thick Li₆PS₅Cl solid electrolyte membrane was interposed between the cathode manufactured in Examples 1 to 3 and Comparative Examples 1 to 4 and the above anode, then pressed at a pressure of 500 MPa, and evaluated in a jig cell form with a driving pressure of 10 MPa and a design capacity of 6 mAh/cm².

The cell was charged at a rate of 0.1 C until the voltage reached 4.3 V, then maintained at 4.3 V and cut off at a rate of 0.05 C. Then, it was discharged at a rate of 0.1 C until the voltage reached 3.0 V during discharge. The initial efficiency was calculated using initial discharge capacity / initial charge capacity x 100 (%).

Table 2 below shows the results of the initial discharge capacity and initial efficiency.

**[Table 2]**

| | 0.1 C initial discharge capacity (mAh/cm²) | 0.1 C initial efficiency (%) |
|---|---|---|
| Example 1 | 5.7 | 91.8 |
| Example 2 | 5.6 | 90.9 |
| Example 3 | 5.6 | 91.6 |
| Example 4 | 5.7 | 91.8 |
| Comp. Ex 1 | 5.6 | 92.3 |
| Comp. Ex 2 | 5.3 | 81.7 |
| Comp. Ex 3 | 5.2 | 82.5 |
| Comp. Ex 4 | 5.4 | 86.0 |

### Experimental Example 2: Evaluation of Battery Lifetime Characteristics

The cell was charged at a rate of 0.5 C until the voltage reached 4.3 V, then maintained at 4.3 V and cut off at a rate of 0.1 C. Then, it was discharged at a rate of 0.5 C until the voltage reached 3.0 V during discharge. The above charge-discharge test was repeated for 50 cycles, and the discharge capacity after 50 cycles was measured as capacity retention rate compared to the initial discharge capacity (0.1C). Table 3 below shows the measured capacity retention rate.

**[Table 3]**

| | Capacity retention rate (%) |
|---|---|
| Example 1 | 87.6 |
| Example 2 | 86.3 |
| Example 3 | 88.1 |
| Example 4 | 86.4 |
| Comp. Ex 1 | 62.1 |
| Comp. Ex 2 | 64.5 |
| Comp. Ex 3 | 53.7 |
| Comp. Ex 4 | 69.3 |

As shown in Table 3 above, it was confirmed that the positive electrodes for secondary batteries according to Examples 1 to 4, which include a halide-based solid electrolyte in the first positive electrode composite layer and a sulfide-based solid electrolyte in the second positive electrode composite layer, exhibited superior capacity retention rates compared to the positive electrodes for secondary batteries according to Comparative Examples 1 and 2 composed of a single composition single layer, the positive electrode for secondary battery according to Comparative Example 3 which includes a sulfide-based solid electrolyte in the first positive electrode composite layer and a halide-based solid electrolyte in the second positive electrode composite layer, or the positive electrode for secondary battery according to Comparative Example 4 where the mass ratio of the first positive electrode composite layer and the second positive electrode composite layer is outside the range of 20:80 to 80:20.

### [Description of Reference Numerals]

1: Positive electrode
100: Positive electrode current collector
200: Positive electrode composite layer
201: First positive electrode layer
202: Second positive electrode layer
300: Solid electrolyte layer

## Claims

1. A positive electrode for a lithium secondary battery comprising:
a positive electrode current collector; and
a positive electrode composite layer laminated on one side of the positive electrode current collector;
wherein the positive electrode composite layer comprises a first positive electrode layer and a second positive electrode layer,
the first positive electrode layer comprises a positive electrode active material, a first solid electrolyte, a conductive material, and a binder,
the second positive electrode layer comprises a positive electrode active material, a second solid electrolyte, a conductive material, and a binder, and
the first solid electrolyte and the second solid electrolyte are different from each other.

2. The positive electrode for a lithium secondary battery according to claim 1,
wherein the first solid electrolyte comprises a halide-based solid electrolyte, and
the second solid electrolyte comprises a sulfide-based solid electrolyte.

3. The positive electrode for a lithium secondary battery according to claim 2,
wherein the first solid electrolyte is represented by the following Chemical Formula 1:
[Chemical Formula 1] Li-M-X
in Chemical Formula 1,
M is a metal element selected from the group consisting of Y, Sc, Cr, Mn, Fe, Co, Ni, Al, Ga, As, Sb, Bi, Mg, Ca, Zn, Cd, Tb, Dy, Ho, Er, Tm, and Yb; and X is a halogen element, which is F, Cl, or Br.

4. The positive electrode for a lithium secondary battery according to claim 2,
wherein the second solid electrolyte comprises one or more selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS.

5. The positive electrode for a lithium secondary battery according to claim 1,
wherein the positive electrode composite layer is disposed between the positive electrode current collector and a solid electrolyte layer, and
the second positive electrode layer is disposed on one side of the solid electrolyte layer.

6. The positive electrode for a lithium secondary battery according to claim 1,
wherein a mass ratio of the first positive electrode layer and the second positive electrode layer is 20:80 to 80:20.

7. The positive electrode for a lithium secondary battery according to claim 1,
wherein a loading level of the positive electrode is 5 mAh/cm² or more.

8. The positive electrode for a lithium secondary battery according to claim 1,
wherein the secondary battery is an all-solid-state battery.

9. An all-solid-state lithium secondary battery comprising:
the positive electrode according to any one of claims 1 to 8;
a negative electrode; and
a solid electrolyte disposed between the positive electrode and the negative electrode.
